# EUROPÄISCHE PATENTSCHRIFT

(11) **EP 0 395 587 B1**
(45) Veröffentlichungstag und Bekanntmachung des Hinweises auf die Patenterteilung: **12.03.1997**
(21) Anmeldenummer: 90810313.8
(22) Anmeldetag: 19.04.1990
(51) Int. Cl.: G01N 21/33

(54) **Verfahren zur Steuerung und Optimierung industrieller Prozesse für die Herstellung von Farbstoffen**
Method for controlling and optimizing industrial processes for manufacturing dyes
Procédé de commande et d'optimisation de processus industriels de fabrication de colorants

(30) Priorität: 28.04.1989 DE 3914185
(43) Veröffentlichungstag der Anmeldung: 31.10.1990
(73) Patentinhaber: Ciba Specialty Chemicals Holding Inc., 4057 Basel (CH)
(72) Erfinder: Langfeld, Horst, Dr., D-7889 Grenzach-Wyhlen 1 (DE); Minges, Ronald, Dr., D-7889 Grenzach-Whylen 2 (DE); Puebla, Claudio, Dr., Baton Rouge, Louisiana 70810 (US); Schmidt, Wilhelm, Dr., D-7850 Lörrach (DE)

(56) Entgegenhaltungen:
- EP-A- 0 254 879
- FR-A- 2 444 271
- MANUFACTURING TECHNOLOGY NOTE 83-0795, U.S. Army Materiel Development & Readiness Command, Alexandria, Va, US, Juni 1983
- ANALYTICAL LETTERS, Bd. 17, 1984, Seiten 677-688; A. VAN LOOSBROEK et al.: 'Identification of mixtures of synthetic organic pigments using UV-VIS spectrophotometry and Kalman filtering'
- ISA TRANSACTIONS, Bd. 12, Nr. 2, 1973, Seiten 103-107; R. SALTZMAN et al.: 'A photometric analyzer system for monitoring and control of the H2S/SO2 ratio in sulfur recovery plants'

## Beschreibung

Die vorliegende Erfindung betrifft ein neues Verfahren zur Steuerung und Optimierung industrieller Prozesse für die Herstellung von Farbstoffen, optischen Aufhellern und deren Zwischenprodukte, indem man die Methode der UV/VIS-Absorptionsspektroskopie auf Herstellungsverfahren für Farbstoffe, optische Aufheller und deren Zwischenprodukte anwendet.

In den letzten Jahren ist man zunehmend bestrebt, industrielle Herstellungsverfahren für Farbstoffe, optische Aufheller und deren Zwischenprodukte zu automatisieren und zu optimieren, und zwar sowohl was den Herstellungsprozess anbetrifft, als auch hinsichtlich der Aufarbeitung. Um hier zu befriedigenden und reproduzierbaren Ergebnissen zu gelangen, ist man auf Analysenmethoden angewiesen, die sich durch folgende Kriterien auszeichnen: kurze Analysendauer, hohe Analysenfrequenz bzw. hoher Informationsgehalt pro Zeiteinheit, möglichst geringe Kosten, Einfachheit, Zuverlässigkeit, Automationsfähigkeit und geringer Platzbedarf. Geräte, die diesen Anforderungen genügen, sind vor allem Sensoren für die Messung physikalischer Parameter, wie z.B. pH-Wert, Temperatur, Druck und Verbrauch an Ausgangsverbindungen.

Diese Parameter liefern jedoch keine Information über den jeweiligen Verfahrensstand und Verfahrenszustand (Ausbeute an gewünschtem Produkt, Anteil an Nebenprodukten, Produktqualität) und den jeweiligen Verlauf der chemischen Reaktion. Damit sind Kontrolle und Sicherstellung einer gleichbleibenden Produktqualität verbunden mit optimaler Ausbeute nicht gewährleistet. Ferner sind aus den physikalischen Parametern keine Prognosen hinsichtlich Reaktionsende, Produktqualität und Ausbeute möglich. Es ist bisher üblich, die Reaktionsmasse am Ende einer Verfahrensstufe oder erst am Ende des ganzen Verfahrens zu analysieren; damit sind korrigierende Massnahmen im Verlauf des Verfahrens ausgeschlossen.

Sowohl für kontinuierliche wie insbesondere für diskontinuierliche Herstellungsverfahren für Farbstoffe, optische Aufheller und deren Zwischenprodukte wird heute unabhängig von der Qualität der Ausgangsmaterialien eine gleichbleibende Qualität der Verfahrensprodukte bei optimaler Ausbeute verlangt.

Insbesondere diskontinuierliche Herstellungsverfahren (sog. batch-Prozesse) führen leicht zu schwankenden Qualitäten der Verfahrensprodukte bedingt durch unterschiedliche Qualität der Ausgangsverbindungen, Mangel an Kontroll- bzw. Steuerungsmethoden, und die Ausbeute ist von Partie zu Partie verschieden.

Aufgabe der Erfindung ist es daher, eine Analysenmethode zu finden, die den genannten Anforderungen entspricht, und ein Verfahren zur Steuerung und Optimierung der genannten Herstellungsverfahren mit dieser Analysenmethode zu entwickeln, so dass Steuerung und Optimierung insbesondere auch im on-line Betrieb durchgeführt werden können.

Gefunden wurde, dass die UV/VIS-Absorptionsspektroskopie hervorragend für diesen Zweck geeignet ist.

Die UV/VIS-Absorptionsspektroskopie umfasst den Wellenlängenbereich von ca. 200 bis ca. 750 nm; sie ist eine lang-bekannte Methode, die für eine Vielzahl chemischer Verbindungen, insbesondere solche Verbindungen, die bei der Herstellung von Farbstoffen eingesetzt werden, ein charakteristisches Bild als Ausdruck der π-Elektronenkonfiguration dieser Verbindung liefert.

Im Vergleich zu anderen analytischen Methoden, wie z.B. chromatographischen Trennmethoden, bietet die UV/VIS-Absorptionsspektroskopie deutliche Vorteile durch eine kurze Ansprechzeit, eine hohe Frequenz, Automationsfähigkeit, geringe Kosten und Anwendungs- und Wartungsfreundlichkeit.

Das bisher primäre Anwendungsgebiet der UV/VIS-Absorptionsspektroskopie ist die Analyse von Reaktionsprodukten zur Ueberwachung der Reinheit, d.h. diese Methode wird am Ende eines Herstellungsverfahrens eingesetzt.

In Manufacturing Technology Note 83-0795 U.S. Army Materiel Development & Readiness Command, Alexandria, Va, US, Juni 1983 ist ein Verfahren beschrieben, worin zwecks Bestimmung der Reinheit von Farbstoffen Verhältnisse aus bei zwei einzelnen Wellenlängen gewonnenen Absorptionen verglichen werden.

Gegenstand der vorliegenden Erfindung ist ein Verfahren zur on-line Steuerung und Optimierung chemisch industrieller Diazotierungen, Kupplungsreaktionen, Komplexierungen, Kondensationsreaktionen, Reduktionsreaktionen und Oxydationsreaktionen für die Herstellung von Farbstoffen, worin man ein UV/VIS-Spektrum mindestens einer Ausgangsverbindung zwecks Bestimmung der Reinheit oder des Ansatzverhältnisses von Ausgangsverbindungen, oder der Bestimmung der Ursache von Abweichungen vom Sollspektrum während des Herstellungsverfahrens aufzeichnet, ein UV/VIS-Spektrum mindestens eines Reaktionsproduktes aufzeichnet, und während des Herstellungsverfahrens durch Differenzanalyse des momentanen UV/VIS-Spektrums der Reaktionsmasse und des UV/VIS-Absorptionsspektrums des gewünschten Reaktionsproduktes das Verfahren so steuert und optimiert, dass die Differenz der Spektren kleiner wird, und zur Steuerung und Optimierung die Parameter Temperatur, Druck, Menge der Ausgangsmaterialien, Reaktionszeit und/oder pH-Wert einsetzt.

Die UV/VIS-Absorptionsspektroskopie bietet eine wichtige Eigenschaft, da sie mit einem direkt zugänglichen chemischen Parameter operiert. Das UV/VIS-Absorptionsspektrum liefert als Ausdruck der π-Elektronenkonfiguration der untersuchten Substanz bzw. der untersuchten Reaktionsmasse einen direkten Zugang zu der Qualität und Reinheit der eingesetzten und der erhaltenen Verbindungen bzw. den Ist-Zustand, d.h. den momentanen zum Zeitpunkt der Messung vorliegenden Reaktionsstand und Zustand eines Verfahrens.

Der Verlauf der UV/VIS-Absorptionsspektren bzw. die Aenderungen der Absorption im Verlauf eines Herstellungsverfahrens vermitteln direkte Informationen, die gemäss vorliegendem Erfindungsgegenstand zur Steuerung und Optimierung eines Verfahrens dienen.

Als technische Voraussetzungen, die den Einsatz der UV/VIS-Absorptionsspektroskopie gemäss vorliegender Erfindung zu einer schnellen, flexiblen, kostengünstigen und anwenderfreundlichen Methode machen, kommen z.B. in Betracht: Computer-Technik, Dioden-Zeilen-Spektrophotometer und Lichtleiter.

Die Differenzanalyse kann sich über einen grossen Wellenlängenbereich erstrecken.

Im allgemeinen hat es sich als günstig erwiesen, von allen Ausgangsverbindungen UV/VIS-Absorptionsspektren aufzuzeichnen und zu speichern, da durch Spektrenvergleich und Spektrensubtraktion relativ einfach Ansatzbestimmungen der Einzelkomponenten möglich sind; ferner können Bestimmungen von Ansatzverhältnissen bei Gemischen von Ausgangsverbindungen sowie eine Qualitätskontrolle der eingesetzten Ausgangsverbindungen durchgeführt werden. Bedingung ist, dass von möglichst jeder für das Verfahren vorgesehenen Ausgangsverbindung ein UV/VIS-Referenzabsorptionsspektrum gespeichert ist, um die Reinheit jedes neuen Ansatzes zu kontrollieren, und die gültige Menge jeder Komponente festzulegen.

Die UV/VIS-Absorptionsspektren von Mischungen zeigen ein additives Verhalten, d.h. das UV/VIS-Absorptionsspektrum einer Mischung von zwei oder mehr Produkten zeigt das Bild der sogenannten Mantelkurve, die der Summe der Einzelspektren im jeweiligen Verhältnis der Mischungspartner entspricht. Für den Fall, dass geeignete Mantelkurven mit den verschiedenen Reaktionspartnem gespeichert sind, kann das korrekte Ansatzverhältnis der Reaktionspartner durch einfache mathematische Verarbeitung (Differenzanalyse des "Ist-Spektrums" mit dem gespeicherten "Soll-Spektrum") und entsprechendem Nachsetzen einer oder mehrerer Komponenten erreicht werden.

Bei der Differenzanalyse der UV/VIS-Absorptionsspektren handelt es sich um einen qualitativen Vergleich von Spektren der rein mathematisch durchgeführt werden kann und konzentrationsunabhängig ist, da immer auf eine Extinktion und bei einer ausgewählten Wellenlänge normierte Spektren verglichen werden. Normiert wird z.B. bei einer Wellenlänge die nur für das Reaktionsprodukt eine Absorption zeigt.

Bei der Ansatzbestimmung der Reaktionspanner wird z.B. so vorgegangen, dass man die Komponenten in gewünschtem Verhältnis mischt, ein UV/VIS-Absorptionsspektrum aufnimmt und mit einem entsprechenden gespeicherten Spektrum vergleicht. Anhand der Wellenlängenposition der Abweichung und der Amplitude der Abweichung kann bei zuvor gespeichertem Referenzspektrum jeder Komponente der oder die fehlenden Komponenten sowie die jeweils fehlende Menge ermittelt werden. Nach abschliessender Differenzanalyse, die lediglich eine Differenz im Rahmen der Fehlergrenze zeigt, kann mit der eigentlichen Umsetzung und Steuerung und Optimierung mit Hilfe der UV/VIS-Absorptions-Differenzanalyse begonnen werden.

Als industrielle Herstellungsverfahren die gemäss der vorliegenden Erfindung mittels UV/VIS-Absorptionsspektroskopie gesteuert und optimiert werden, kommen
a) Herstellungsverfahren für Farbstoffe ; und
b) bevorzugt Herstellungsverfahren für Mono- oder Polyazo-, Metallkomplexazo-, Anthrachinon-, Phthalocyanin-, Formazan-, Azomethin-, Nitroaryl-, Dioxazin-, Phenazin- oder Stilbenfarbstoffe in Betracht.

Als chemische Umsetzungen, die erfindungsgemäss gesteuert und optimiert werden, kommen für die unter a) und b) genannten Herstellungsverfahren Diazotierungen, Kupplungsreaktionen, Komplexierungen, Kondensationsreaktionen, Oxydationen und Reduktionen in Betracht.

Industrielle Prozesse zur Herstellung von Farbstoffen führen häufig zu komplexen, schwer charakterisierbaren Reaktionsgemischen, die in ihrer Zusammensetzung mit geringster Abweichung reproduziert werden müssen, um den Qualitätsanforderungen zu genügen. Das ständige Verfolgen des Reaktionsverlaufs mit dem Ziel bei Abweichungen sofort korrigierend eingreifen zu können, stellt hohe Anforderungen an die Steuerung des Prozesses.

Ferner kann es erforderlich sein, den Endpunkt einer Umsetzung schnell und exakt festzustellen, da sowohl eine zu kurze Reaktionsführung als auch eine zu lange Reaktionsführung abweichende Zusammensetzungen der Reaktionsmasse zur Folge haben kann.

So lässt sich z.B. bei der Diazotierung eines Amins nicht immer der Endpunkt aus der Kontrolle des Nitritgehalts bestimmen, da die Diazotierung am Ende der Umsetzung so langsam verläuft, dass kaum noch Nitrit verbraucht wird. Bei frühzeitigem Abbrechen der Reaktion und einer nachfolgenden pH-Einstellung für die Kupplungsreaktion kann das diazotierte Amin mit dem nicht-diazotierten Amin kuppeln, wodurch eine Ausbeuteverminderung erfolgt und auch die zu erzielende Nuance nicht erreicht wird.

Bei der Steuerung und Optimierung der oben genannten Diazotierung mittels UV/VIS-Absorptionsspektroskopie kann der Ist-Zustand dadurch geprüft werden, dass eine Probe auf einen kupplungsfähigen pH-Wert eingestellt wird und das UV/VIS-Absorptionsspektrum aufgenommen wird und mit einem Spektrum einer vollständig diazotierten Probe verglichen wird. Da bei unvollständiger Diazotierung des Amins die Kupplung erfolgt, zeigt dieses Spektrum zu einem Teil die Absorption eines Azokörpers.

Bei Kupplungsreaktionen kann es notwendig sein, einen Ueberschuss an der Diazokomponente oder an der Kupplungskomponente zu vermeiden. Auch hier kann mittels UV/VIS-Absorptionsspektroskopie der Endpunkt der Umsetzung exakt erkannt werden. So lässt sich beispielsweise der Ueberschuss einer Kupplungskomponente nach Probenahme der Reaktionsmasse durch Zugabe einer diazotierten Amins feststellen.

Bei Kondensationsreaktionen, z.B. von verschiedenen Aminoazoverbindungen mit einem Dinitrostilben, werden zum Teil keine stöchiometrische Regeln eingehalten. Es wird ein schwer zu definierendes Gemisch von Azoxy- und Azoverbindungen erhalten und auch angestrebt, dessen Zusammensetzung in relativ engen Grenzen reproduziert werden muss. Der Endpunkt der Kondenstation muss exakt erfolgen, denn der gesucht Farbton stellt sich nur bei vollständiger Kondensation ein.

Bei Oxydationsreaktionen, z.B. bei einer kupferkatalysierten internen Zyklisierung einer Styryldisazoverbindung wird der gewünschte Farbton nur nach vollständiger Zyklsierung und schnellem Unterbruch der Umsetzung erreicht. Die Anwesenheit von Vorstufen im Reaktionsgemisch fürt zu einer Farbtonverschiebung und das Ueberschreiten des Oxydationsendpunktes, d.h. die Anwesenheit von Zersetzungsprodukten, führt zu einem trüben Farbton.

Aehnlich ist das Verhalten bei Reduktionsreaktionen.

Die Methode der UV/VIS-Spektroskopie kann zur Steuerung und Optimierung sowohl von kontinuierlichen wie auch insbesondere von diskontinuierlichen Herstellungsverfahren angewendet werden.

Eine besonders bevorzugte Ausführungsform des erfindungsgemässen Verfahrens ist dadurch gekennzeichnet, dass man die Methode der UV/VIS-Absorptionsspektroskopie zur on-line Steuerung und Optimierung verwendet, d.h. die Daten aus dem UV/VIS-Messgerät werden in einem Rechner normiert, gespeichert und bei der Differenzanalyse werden die Daten subtrahiert, gegebenenfalls mit bereits vorhandenen gespeicherten Daten verglichen, um den Grund der Differenz aufzufinden und gegebenenfalls entsprechend Massnahmen, welche dieser Differenz abhelfen, durchzuführen.

Eine ganz besonders bevorzugte Ausführungsform des erfindungsgemässen Verfahrens ist dadurch gekennzeichnet, dass man Herstellungsverfahren durch Differenzanalyse der Konzentrationsverhältnisse mindestens einer Ausgangsverbindung und mindestens eines Reaktionsproduktes steuert und optimiert.

Es hat sich als günstig erwiesen, dass man die Differenzanalyse mit bestimmter Frequenz wiederholt.

Diese Frequenz hängt vom Herstellungsverfahren ab, wobei sich die Wiederholung z.B. zwischen 2- und 20mal, insbesondere 2- bis 5mal als ausreichend erwiesen hat.

Eine Bedingung der Differenzanalyse ist, dass die Differenz der Spektren von Verfahrensbeginn bis zum Verfahrensende jeder Reaktionsstufe kleiner wird.

Zur Steuerung und Optimierung sind die Parameter Temperatur, Druck, Menge der Ausgangsmaterialien, Reaktionszeit und/oder pH-Wert geeignet.

Eine wichtige Ausführungsform des erfindungsgemässen Verfahrens ist dadurch gekennzeichnet, dass man UV/VIS-Spektren mindestens einer Ausgangsverbindung und mindestens eines Reaktionsproduktes in einem Computer speichert, während des Herstellungsverfahrens mit bestimmter Frequenz (z.B. alle 30 Minuten) den momentanen Stand der Umsetzung durch Differenzanalyse der Konzentrationsverhältnisse des Ist-Zustandes der Reaktionsmasse und des gewünschten Reaktionsproduktes spektroskopisch bestimmt, und anhand dieser Differenz gegebenenfalls durch Aenderung eines oder mehrerer der Parameter Temperatur, Druck, Menge der Ausgangsmaterialien, Reaktionszeit und/oder pH-Wert die Spektrendifferenz gegen Null steuert.

Eine besonders wichtige Ausführungsform des erfindungsgemässen Verfahrens zur Steuerung und Optimierung von industriellen Prozessen bei der Herstellung von Farbstoffen ist dadurch gekennzeichnet, dass man bei Diazotierungen, Kupplungsreaktionen, Komplexierungen, Kondensationsreaktionen, Oxydationen und Reduktionen das UV/VIS-Absorptionsspektrum mindestens einer Ausgangsverbindung und mindestens eines Reaktionsproduktes in einem Computer speichert, während der Umsetzung mit bestimmter Frequenz (z.B. alle 30 Minuten) den momentanen Stand der Umsetzung durch Differenzanalyse der Konzentrationsverhältnisse des Ist-Zusatndes der Reaktionsmasse und des gewünschten Reaktionsproduktes spektroskopisch bestimmt, und anhand dieser Differenz gegebenenfalls unter Aenderung eines oder mehrerer der Parameter Temperatur, Druck, Menge der Ausgangsmaterialien, Reaktionszeit und/oder pH-Wert die Spektrendifferenz gegen Null steuert.

Bei der Verfahrenssteuerung und Optimierung gemäss vorliegender Erfindung erfolgt die Steuerung und Optimierung im allgemeinen schrittweise, d.h. jeder Verfahrensschritt bzw. jede Verfahrensstufe, wie z.B. Diazotierung, Kupplung oder Kondensation, wird einzeln gesteuert und optimiert. Man kann z.B. so vorgehen, dass nach Mengenberechnung der Komponenten mittels UV/VIS-Absorptionsspektroskopie und nach Kontrolle der Mengenverhältnisse der Komponenten der erste Verfahrensschritt beginnt, indem zunächst ein UV/VIS-Absorptionsspektrum zu Beginn des Verfahrensschrittes aufgenommen wird und nach Normierung mit dem gespeicherten UV/VIS-Absorptionsspektrum des gewünschten Reaktionsproduktes verglichen wird. Die Differenzanalyse der Mantelkurve der Summe der Reaktionskomponenten und der (gespeicherten) Mantelkurve des Reaktionsergebnisses zeigte die maximale Differenz. Nach Beginn der Umsetzung, z.B. durch Einstellen der für diesen Verfahrensschritt notwendigen Temperatur oder des pH-Wertes, werden weitere UV/VIS-Absorptionsspektren aufgenommen, normiert und die oben angegebene Differenzanalyse durchgeführt. Die Differenzanalyse sollte im Verlauf des Verfahrens immer geringere Abweichungen zeigen. Da Position und Grösse der Differenzdaten bekannt sind, kann bei normalem Reaktionsverlauf, d.h. bei jeder Messung eine geringere Abweichung und am Ende der Reaktion identische Mantelkurven der Reaktionsmasse und der gespeicherten Mantelkurve, der optimale Zeitpunkt für die Beendigung der Reaktion festgestellt werden; ferner kann z.B. bei bestimmten Positionen die Grösse der Differenzdaten zunehmen, wodurch z.B. die vermehrte Bildung von Nebenprodukten angezeigt wird; Ziel der erfindungsgemässen Verfahrenssteuerung und Optimierung ist es nun in so einem Fall durch Aenderung der Verfahrensparameter, wie z.B. Temperatur, pH-Wert und/oder Zugabe von Ausgangsmaterial, der Nebenprodukt-Bildung entgegenzuwirken. Es ist dabei im allgemeinen völlig gleichgültig, welche Massnahme getroffen wird, da nach jeder Massnahme und Aufnahme eines UV/VIS-Spektrums die Differenzanalyse nur bei richtiger Wahl der Massnahme eine kleiner werdende Differenz anzeigt.

Bei industriellen Prozessen ist es häufig so, dass sich Verfahrensschritte in bestimmten zeitlichen Abständen wiederholen. Somit ist es lohnenswert jede auftretende Differenz, die vom normalen Verlauf abweicht, und die dazugehörige Massnahme im Computer zu speichern, so dass nach mehreren Verfahrens-Wiederholungen aufgrund von Position, Grösse und Zeitpunkt einer bestimmten Differenz gegebenenfalls rechnergesteuert sofort die richtige Massnahme zur Steuerung und Optimierung des Verfahrens getroffen werden kann.

Mit dem erfindungsgemässen Verfahren können nicht nur solche Umsetzungen durchgeführt werden, deren UV/VIS-Absorptionsspektren z.B. am Anfang und am Ende der Umsetzung voneinander verschieden sind und die ein lösliches Produkt liefern; sondern auch solche Umsetzungen die dadurch gekennzeichnet sind, dass die Steuerungen nur durch Bildung geeigneter Derivate durchgeführt werden können, wie z.B. Umsetzung eines Schwefel- oder Küpenfarbstoffes in die lösliche Leukoform bzw. bei Verbindungen mit sehr ähnlichen UV/VIS-Absorptionsspektren, wie z.B. bei Reaktivfarbstoffen mit einem reaktiven Chlor-s-triazinrest und einem hydrolysierten nicht mehr faserreaktiven Hydroxy-s-triazinrest, kann durch Umsetzung mit einem Amin z.B. ein Arylamin der noch aktive Anteil festgestellt werden, der ein von dem hydrolysierten Anteil verschiedenes UV/VIS-Absorptionsspektrum liefert. Eine weitere Ausführungsform des erfindungsgemässen Verfahrens ist somit dadurch gekennzeichnet, dass man Verbindungen mit unspezifischem UV/VIS-Absorptionsspektrum oder mit ungenügend zu analysierender Differenz derivatisiert und die Steuerung und Optimierung anhand der Derivate der Verbindungen durchführt. Die Derivatisierung kann z.B. mittels FIA-Technik (Flow Injection Analysen-Technik) erfolgen.

Für das erfindungsgemässe Verfahren ist es notwendig, dass die spektrophotometrisch zu analysierende Probe mit bestimmter Frequenz dem Reaktionsmedium entnommen wird, oder es wird direkt im Reaktionsmedium gemessen, z.B. mittels eines optischen Sensors z.B. mittels der ATR-Technik (attenuated total reflection). Vorteil dieser Technik ist z.B., dass keine Probenaufbereitung notwendig ist.

Als vorteilhaft erweist es sich ferner, den Messort und das entsprechende Messgerät über Lichtleiter miteinander zu verbinden, wodurch eine Signalübertragung über weite Strecken z.B. bis zu 1000 m möglich ist, die nicht durch elektrische oder magnetische Felder gestört wird. Ein weiterer Vorteil der Lichtleiter besteht darin, dass keine besonderen Massnahmen zu Explosionsschutz getroffen werden müssen.

Ueberraschenderweise kann mit dem erfindungsgemässen Verfahren nicht nur der augenblickliche Verfahrensstand, wie z.B. die bisher erzielte Ausbeute an Endprodukt, Anteil an Nebenprodukten festgestellt und überwacht werden, sondern der Prozess kann bedingt durch die grosse Anzahl prozesstechnisch relevanter Daten pro Zeiteinheit, die sich aus der UV/VIS-Absorptionsspektroskopie und der Differenzanalyse ergibt, auf eine gewünschte Qualität (Verfahrensproduktezusammensetzung) hin gesteuert werden, indem die im Detektor ermittelten Daten zur Prozesssteuerung verwendet werden (feed-back, bzw. insbesondere feed-forward Steuerung). Ferner ergibt sich aus jeder neuen Analyse eine Prognose über den weiteren Verfahrensablauf und das Verfahrensende.

Durch Messung beispielsweise spektraler Daten während der Reaktion werden folgende Informationen gewonnen und zur Prozesssteuerung verwendet:
- optimaler Zeitpunkt für die Beendigung der Reaktion,
- Ausbeutekontrolle,
- Kontrolle der Reaktionsbedingungen, indem Abweichungen sich beispielsweise durch vermehrte Bildung von Nebenprodukten ausdrücken,
- Qualitätskontrolle durch Bestimmung bzw. Feststellung der Nebenprodukte.

Bei den Farbstoffen, deren Synthese und Verarbeitung mittels der hier beschriebenen Methode überwacht und gesteuert wird, handelt es sich um Farbstoffe für beliebige Substrate, insbesonders handelt es sich um Papier-, Leder- und Textilfarbstoffe; es handelt sich in erster Linie um Textilfarbstoffe, die den verschiedensten chemischen Klassen angehören. Es handelt sich beispielsweise um anionische Farbstoffe, wie Nitro-, Aminoketon-, Ketonimin-, Methin-, Nitrodiphenylamin-, Chinolin-, Aminonaphthochinon- oder Cumarinfarbstoffe oder auch saure Farbstoffe auf Basis von Gelbholzextrakt, insbesondere saure Anthrachinon- und Azofarbstoffe, wie Monoazo-, Disazo- und Polyazofarbstoffe. Ferner kommen basische, d.h. kationische Farbstoffe in Frage. Es handelt sich hier beispielsweise um die Halogenide, Sulfate, Methosulfate oder Metallhalogenid-Salze, z.B. Tetrachlorzinkate von Azofarbstoffen, wie Monoazo-, Disazo- und Polyazofarbstoffen, von Anthrachinonfarbstoffen, Phthalocyaninfarbstoffen; Diphenylmethan- und Triarylmethanfarbstoffen, Methin-, Polymethin- und Azomethin- farbstoffen, von Thiazol-, Ketonimin-, Acridin-, Cyanin-, Nitro-, Chinolin-, Benzimidazol-, Xanthen-, Azin-, Oxazin- und Thiazinfarbstoffen. Bevorzugt sind die weiter oben angegebenen Farbstoffe.

Unter dem Begriff Farbstoffe sollen im vorliegenden Fall auch optische Aufheller verstanden werden, z.B. Stilbenaufheller, vor allem solche vom Typ der Bis-triazinylaminostilben-disulfonsäuren, der Bis-styrylbiphenyle und -benzole und der Bis-triazolylstilben-disulfonsäuren.

Es versteht sich von selbst, dass je nach Aufgabenstellung im Zuge der Farbstoffsynthese neben den eigentlichen Farbstoffen bzw. Aufhellern, nach dem erfindungsgemässen Verfahren auch Vor- und Nebenprodukte erfasst werden. Gerade die während der Reaktion gebildeten Nebenprodukte sind von grosser Bedeutung, nicht nur hinsichtlich der Ausbeute, sondern auch was den Farbton bzw. die Eigenfarbe des entsprechenden Farbstoffs/Aufhellers anbetrifft.

Grundsätzlich ist das Verfahren von grosser Anwendungsbreite und lässt sich in der Farbstoffherstellung zur Steuerung und Regelung der Farbstoffsynthese, zur Steuerung und Regelung von Edukt- und Produktflüssen, zur Analyse und zur Qualitätskontrolle einsetzen.

Die Methode der UV/VIS-Absorptionsspektroskopie mit Differenzanalyse bietet die Möglichkeit, eine nahezu Echtzeitsteuerung oder direkte Steuerung eines Verfahrens [near-real-time monitoring] vorzunehmen. Als Messgerät hat sich ein Dioden-Zeilen-Spektrophotometer als besonders geeignet erwiesen.

Bei der Herstellung von Farbstoffen ist es ein Ziel neben möglichst hoher Ausbeute einen bestimmten Typ herzustellen bzw. die Herstellung so zu gestalten, dass reproduzierbar typkonforme Produkte erhalten werden.

Zur Einstellung von Farbstoffen eines bestimmten Typs geht man klassisch so vor, dass die einzustellenden Muster - mit unterschiedlichen Mengen Nuancierfarbstoffen versetzt - und der Farbstofftyp in einem Arbeitsansatz auf das Substrat, vorzugsweise das Textilmaterial ausgefärbt werden. In Problemfällen werden auch mehrere Nuancierfarbstoffe ausprobiert oder es wird zunächst eine Grobabstufung und hernach eine feinere Abstufung ausgefärbt. Die Beurteilung erfolgt visuell, wobei nicht nur auf Farbgleichheit geprüft wird, sondern auch weniger zuverlässige Interpolationen vorgenommen werden müssen. Das Vorgehen ist sehr arbeitsintensiv und bedingt einen hohen Ausbildungsstand.

Aus diesem Grunde ist man dazu übergegangen, die Beuneilung der Färbung durch Remissionsmessungen vorzunehmen - das bedingt eine egale Färbung, wie sie z.B. in der Stückfärberei erhalten werden kann. Garne sind schlecht geeignet.

Eine wesentliche Rationalisierung der Einstellung ist jedoch erst möglich, wenn die aufwendige und fehlerträchtige Färbung eliminiert werden kann. Dies bedingt, dass die Flotten farbmetrisch beschrieben werden können und dass zwischen dem Farbort der Flotte und dem Farbort der Färbung eine Korrelation besteht.

Die Einstellung der Muster geschieht nun so, dass geeignete Lösungen des herzustellenden Typs, des Musters und der Nuancierfarbstoffe bzw. der zu mischenden Muster fotometrisch vermessen werden. In einem zweiten Schritt werden aus diesen Messwerten Farborte berechnet. Aus diesen können dann Farbabstände ermittelt werden und daraus schliesslich Mischungsverhältnisse und zwar so, dass die übrig bleibenden Farbdifferenzen zwischen dem herzustellenden Typ und der Mischung möglichst klein sind.

Für die zu berechnenden Farbkoordinaten sind mehrere Farbräume bekannt.

Allen Rechenverfahren gemeinsam ist die Tatsache, dass sie nur für kleine Farbunterschiede zuverlässige Resultate liefern, dass sie sich jeweils nur auf eine Normlichtart beziehen und dass sie bedingt gleiche Farben zulassen. Bedingt gleiche Farben sind solche, die unterschiedliche Spektren, aber - bezüglich einer Normlichtart - gleiche Farborte aufweisen. Sie verhalten sich gegenüber anderen Lichtarten unterschiedlich und was speziell unangenehm ist - über den Zusammenhang Farbort der Flotte/Farbort der Färbung lässt sich nur schlecht etwas aussagen.

Farborte eignen sich schlecht zur Produktionskontrolle: eine Nuancenverschiebung nach Grün kann sowohl als Ueberschuss einer grünen Komponente, als auch als Unterschuss einer roten Komponente oder als Ueberschuss von nur Blau (nur Gelb) gedeutet werden.

Das erfindungsgemässe Verfahren zur Steuerung und Optimierung von Herstellungsverfahren von Farbstoffen mit Hilfe der Methode der UV/VIS-Absorptionsspektroskopie und der Differenzanalyse ermöglicht nicht nur die Steuerung und Optimierung des eigentlichen Verfahrens, d.h. der chemischen Umsetzung, sondern auch die typkonforme Einstellung des Produktes. Aufgrund der Daten der Differenzanalyse sind Position und Grösse der Abweichung vom Typ bekannt. Bei Umsetzungen mit z.B. vermehrter Nebenprodukt-Bildung kann sofort nach der Synthese mit Hilfe geeigneter Nuancierfarbstoffe ein typkonformes Umsetzungsprodukt erhalten werden.

Ein spezieller Vorteil der UV/VIS-Absorptionsspektroskopie ist die hohe Messfrequenz, welche die feed-forward-Steuerung ermöglicht.

Eine ebenfalls bevorzugte Ausführungsform des erfindungsgemässen Verfahrens ist dadurch gekennzeichnet, dass man zur Steuerung und Optimierung von Herstellungsverfahren von Farbstoffen die Methode der UV/VIS- Absorptionsspektroskopie, insbesondere der Differenzanalyse von UV/VIS-Absorptionsspektren anwendet, wobei der Analysator (Prozessanalysator) aus
- einem Probenahmesystem und gegebenenfalls einem Probenaufbereitungssystem,
- einer Messzelle,
- einem Lichtleitersystem, und
- einem Detektor
besteht, wobei das Probenahmesystem insbesondere entweder aus einem Ventil im Fall von vollständig gelösten Proben oder einem Ventil mit vorgeschalteter kontinuierlicher Filtration, Homogenisierung und/oder Verdünnung der Probe mit einem Lösungsmittel oder einer Membran, wodurch nur messtechnisch relevante Teile der Probe bzw. nur gelöste Teile der Probe in das Analysator-System eingespeist werden, besteht.

Als Messzelle kommt z.B. eine handelsübliche UV-Küvette in Betracht; oder die Transmissionsmessung wird direkt im Reaktionsmedium z.B. mittels eines optischen Sensors, vorgenommen.

Als Lichtleitersystem kommen z.B. parallel geführte Lichtleiter in Betracht. Ueber einen Lichtleiter wird der Messstrahl zugeführt und über den anderen wird der austretende Strahl abgeleitet.

Als Detektor kommt insbesondere ein Dioden-Zeilen-Spektrophotometer in Betracht.

Bevorzugte Verfahrensweisen sind dadurch gekennzeichnet, dass man die Methode der UV/VIS-Absorptionsspektroskopie zur Steuerung und Optimierung
- von Acylierungsreaktionen - unter Acylierung soll insbesondere die Kondensation eines faserreaktiven oder nichtfaserreaktiven Acylrestes mit einem Amin, einer Hydroxylgruppe oder einer Thiolgruppe verstanden werden -,
- von Diazotierungen,
- von Kupplungsreaktionen,
- von Metallisierungen oder
- von Kondensationsreaktionen verwendet.

Anwendung findet das erfindungsgemässe Verfahren z.B.
- zur Konzentrationsbestimmung von Ausgangsmaterialien und/oder Produkt bei den oben genannten Herstellungsverfahren.
- zur Analyse des Ausgangsmaterial/Produkt-Konzentrationsverhältnisses und zur Erfassung der Konzentration von Nebenprodukten bei der Herstellung von Farbstoffen.
- zur on-line Steuerung eines computer-integrierten, automatisierten Herstellungsverfahrens.
- zur on-line Steuerung eines computer-integrierten, automatisierten Herstellungsverfahrens für Farbstoffe.
- zur Nuancierung eines vorgewählten Farbtons bei der Herstellung von Farbstoffen.

### Beschreibungen der Abbildungen:

Abbildungen 1 bis 3 zeigen schematisch das Soll-Spektrum einer Verbindung, abweichende momentane Spektren der Reaktionsmasse, sowie Quellen zur Korrektur der Massenbilanz um die Abweichung zu korrigieren.

Abbildungen 4 bis 8 zeigen schematisch den Verlauf einer Kondensation mit Angabe des Soll-Spektrums einer Verbindung, abweichende momentane Spektren der Reaktionsmasse nach 60, 120, 180 und 210 Minuten sowie der Differenz der jeweiligen Spektren.

Die folgenden Beispiele dienen zur Erläuterung der Erfindung.

Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1: Herstellung des Farbstoffes der Formel 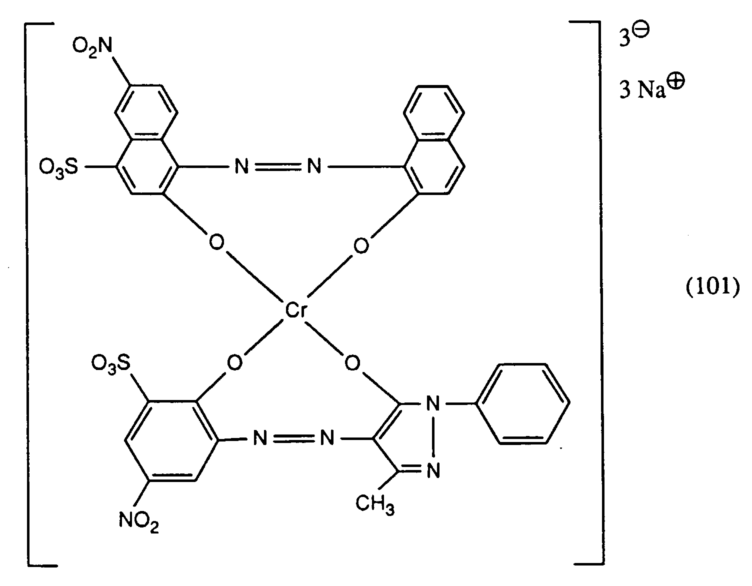 Von einer reinen typkonformen Probe des Farbstoffes der Formel (101) wird ein UV/VIS-Absorptionsspektrum aufgenommen und die Daten in einem Rechner gespeichert.

Von ca. 180 Teilen der Kupplungsmasse des Monoazofarbstoffes der Formel 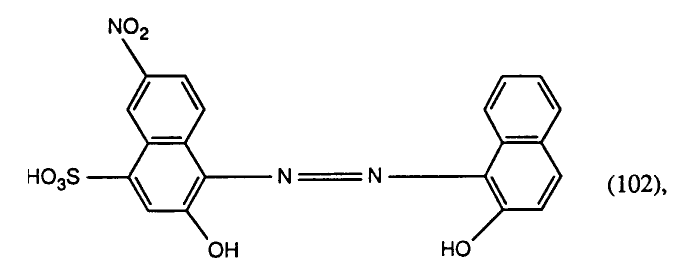 (hergestellt aus 60,7 Teilen 1-Diazo-2-hydroxy-6-nitronaphthalin-4-sulfonsäure durch Kupplung auf 30,9 Teilen 2-Naphthol) wird ein UV/VIS-Absorptionsspektrum aufgenommen und die Daten in einen Rechner gespeichert. In die Kupplungsmasse werden dann bei pH-Wert 6 und 80°, unter gutem Rühren, 80 Teile des Farbstoffes der Formel 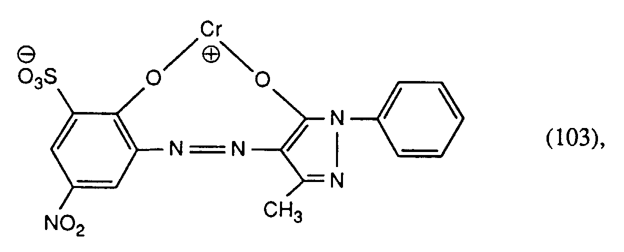 dessen UV/VIS-Absorptions-Daten ebenfalls in einem Rechner gespeichert werden, eingetragen. Der pH-Wert fällt währenddessen auf 3 bis 3,5. Mit Hilfe von 50%-iger NaOH-Lösung wird der pH-Wert wieder auf 6 gestellt und bei 80° solange gerührt bis der pH-Wert konstant bleibt.

Während der Umsetzung wird ein UV/VIS-Absorptionsspektrum der Reaktionsmasse aufgenommen und mit dem Soll-Spektrum des Farbstoffes der Formel (101) verglichen, wobei im folgenden drei der möglichen Abweichungen angegeben werden:

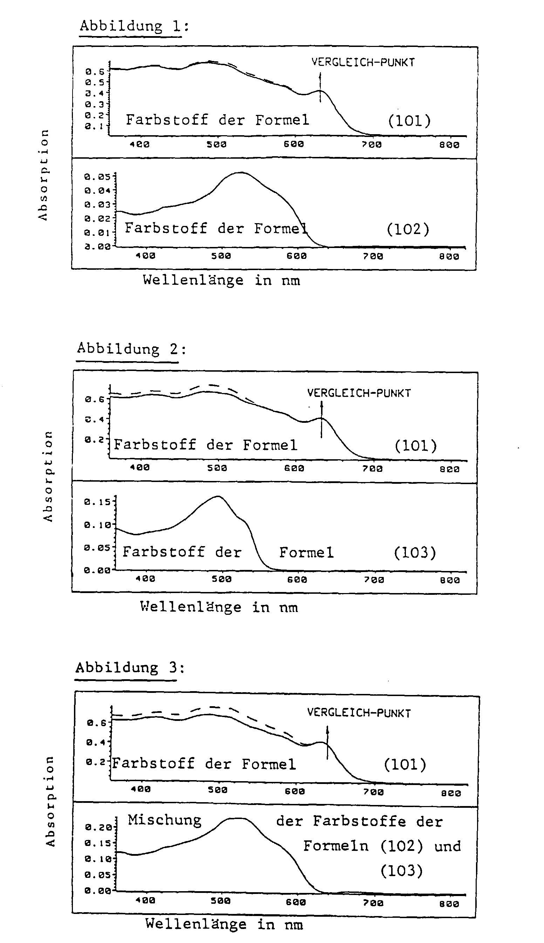

Abbildung 1 zeigt im oberen Teil eine durchgezogene Linie, die dem Soll-Spektrum des Farbstoffes der Formel (101) entspricht, und eine unterbrochene Linie, welche die Abweichung des Spektrums der Reaktionsmasse vom Soll-Spektrum darstellt. Beide Spektren sind am angegebenen Vergleichs-Punkt von 618 nm normiert. Die Abweichung im Bereich von 450 bis 575 nm liegt genau in dem Wellenlängen-Bereich, in dem der Farbstoff der Formel (102) stark absorbiert. Im unteren Teil der Abbildung ist das Spektrum des Farbstoffes der Formel (102) angegeben.

Als Massnahme zur Steuerung des Herstellungsverfahrens wird in kleinen Portionen (je 2 Teile) der Farbstoff der Formel (103) nachgesetzt bis keine Abweichung mehr feststellbar ist.

Abbildung 2 zeigt im oberen Teil eine durchgezogene Linie, die dem Soll-Spektrum des Farbstoffes der Formel (101) entspricht, und eine unterbrochene Linie, welche die Abweichung des Spektrums der Reaktionsmasse vom Soll-Spektrum darstellt. Beide Spektren sind am angegebenen Vergleichs-Punkt von 618 nm normiert. Die Abweichung im Bereich von 450 bis 520 nm liegt genau in dem Wellenlängenbereich, in dem der Farbstoff der Formel (103) stark absorbiert. Im unteren Teil der Abbildung ist das Spektrum des Farbstoffes der Formel (103) angegeben.

Als Massnahme zur Steuerung des Herstellungsverfahrens wird in kleinen Portionen (jeweils 2 Teile) der Farbstoff der Formel (102) nachgesetzt bis keine Abweichung mehr feststellbar ist.

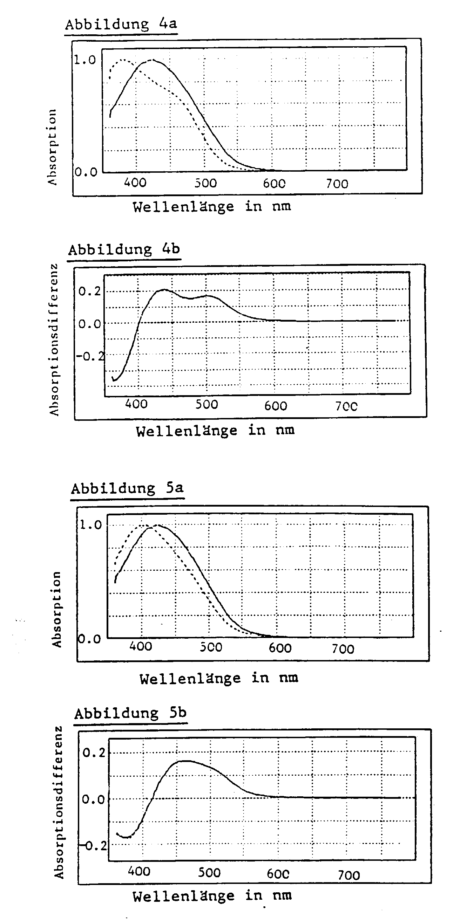

Abbildung 3 zeigt im oberen Teil eine durchgezogene Linie, die dem Soll-Spektrum des Farbstoffes der Formel (101) entspricht, und eine unterbrochene Linie, welche die Abweichung des Spektrums der Reaktionsmasse vom Soll-Spektrum darstellt. Beide Spektren sind am angegebenen Vergleichs-Punkt von 618 nm normiert. Die Abweichung im Bereich von 400 bis 575 nm liegt genau in dem Wellenlängenbereich, in dem die Mischung der Farbstoffe der Formeln (102) und (103) absorbiert. Im unteren Teil der Abbildung ist das Spektrum der Mischung der Farbstoffe der Formeln (102) und (103) angegeben.

Die Abweichung in dem Wellenlängenbereich von 400 bis 575 nm dokumentiert einen relativ hohen Anteil unumgesetzter Ausgangsmaterialien.

Als Massnahme zur Steuerung des Herstellungsverfahrens ist zunächst zu prüfen, ob die Temperatur von 80° eingehalten wird. Falls die Temperatur abgesunken ist, wird die Temperatureinstellung korrigiert, und der weitere Reaktionsverlauf spektroskopisch verfolgt bis keine Abweichung mehr feststellbar ist. Falls jedoch die Temperatureinstellung fehlerfrei ist, wird der pH-Wert kontrolliert. Falls der pH-Wert eine Abweichung anzeigt, wird der pH-Wert von 6 eingestellt und der weitere Reaktionsverlauf spektroskopisch verfolgt, bis keine Aenderung mehr feststellbar ist. Falls jedoch auch die Einstellung des pH-Wertes fehlerfrei ist, wird die Reaktionsdauer verlängert und die Reaktion spektroskopisch verfolgt bis keine Aenderung im Vergleich zum Soll-Spektrum mehr feststellbar ist.

Falls das Spektrum der Reaktionsmasse keine Abweichung gegenüber dem Soll-Spektrum zeigt, ist die Reaktion beendet und der Prozess wird abgebrochen.

Weitere mögliche hier nicht dargestellte Abweichungen der Umsetzung ist die Bildung von symmetrischen 1:2-Chromkomplexverbindungen.

Beispiel 2: Herstellung des Farbstoffes, welcher in Form der freien Säure der Formel 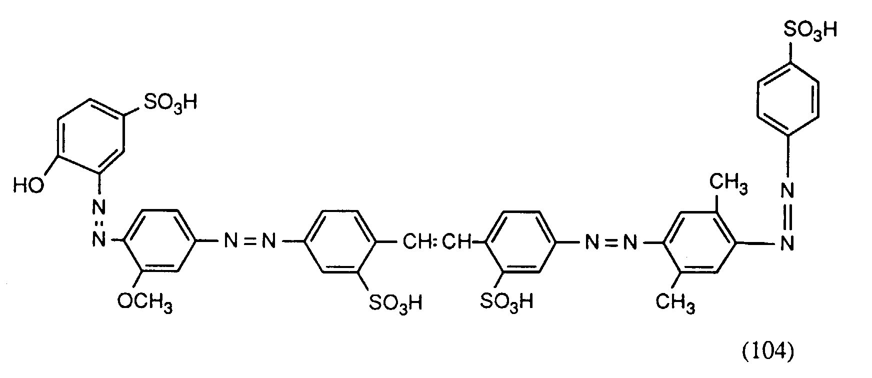 entspricht, gemäss Angaben des Tabellenbeispiels in Zeile 50 auf Seite 5 der DE-C-746 455. Beschrieben wird im folgenden die Kondensation der Komponenten nach Zugabe der Lauge wie z.B. in Beispiel 5 der DE-C-746 455 beschrieben, wobei die Kondensation gemäss DE-C nach 18 Stunden beendet ist.

Abbildung 4a zeigt als durchgezogene Linie das Soll-Spektrum des Farbstoffes der Formel (104) nach der Kondensation und als gestrichelte Linie das Spektrum der Mischung der Komponenten vor der Kondensation. Abbildung 4b zeigt die Differenz der beiden Spektren in Abbildung 4a.

Abbildung 5a zeigt als durchgezogene Linie das Sollspektrum des Farbstoffes der Formel (104) und als gestrichelte Linie der Reaktionsmasse nach einer Kondensationszeit von 60 Minuten bei 100°C. Abbildung 5b zeigt die Differenz der beiden Spektren in Abbildung 5a.

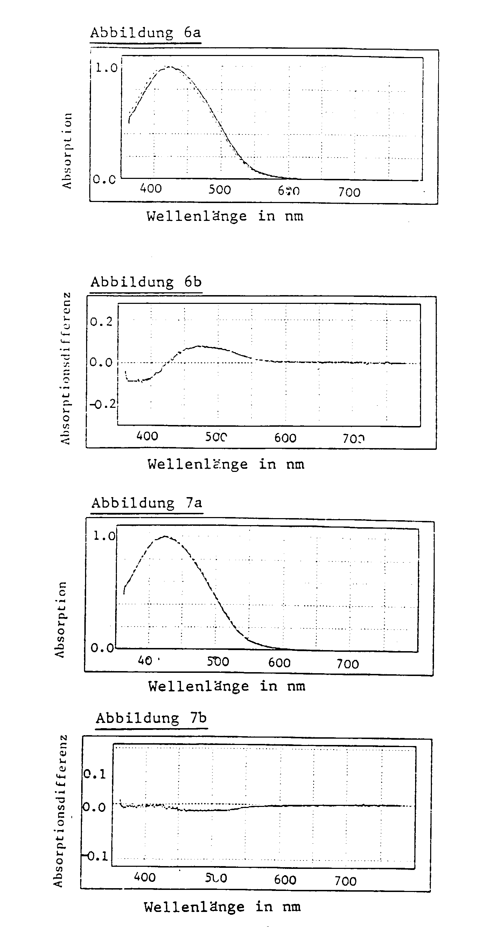

Abbildung 6a zeigt als durchgezogene Linie das Sollspektrum des Farbstoffes der Formel (104) und als gestrichelte Linie der Reaktionsmasse nach einer Kondensationszeit von 120 Minuten bei 100°C. Abbildung 6b zeigt die Differenz der beiden Spektren in Abbildung 6a.

Abbildung 7a zeigt als durchgezogene Linie das Sollspektrum des Farbstoffes der Formel (104) und als gestrichelte Linie der Reaktionsmasse nach einer Kondensationszeit von 180 Minuten bei 100°C. Abbildung 7b zeigt die Differenz der beiden Spektren in Abbildung 7a.

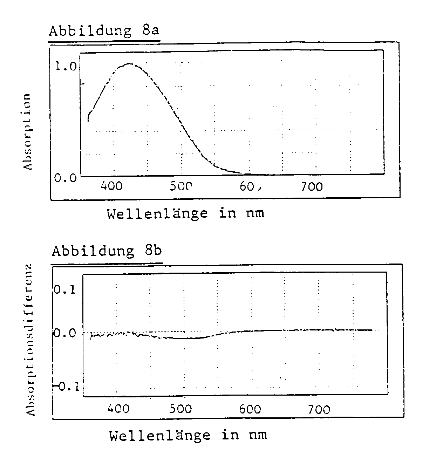

Abbildung 8a zeigt als durchgezogene Linie das Sollspektrum des Farbstoffes der Formel (104) und als gestrichelte Linie der Reaktionsmasse nach einer Kondensationszeit von 210 Minuten bei 100°C. Abbildung 8b zeigt die Differenz der beiden Spektren in Abbildung 8a.

Die Differenz der Spektren 4a, 5a, 6a und 7a, dargestellt in den Abbildungen 4b, 5b, 6b und 7b, zeigt einen immer kleiner werdenden Differenzbetrag. Die Differenz der Spektren 7a und 8a, dargestellt in den Abbildungen 7b und 8b ist nahezu gleich, d.h. die Kondensation ist beendet und wird abgebrochen; der erhaltene Farbstoff der Formel (104) kann nachfolgend gekupfert werden.

Im Unterschied zu den Angaben der DE-C-746 455, worin die Kondensation erst nach 18 Stunden abgebrochen wird, ist die mittels UV/VIS-Absorptionsspektroskopie und Differenzanalyse gesteuerte Umsetzung bereits nach 3 1/2 Stunden beendet.

Gemäss den Angaben der DE-C-746 455 kann durch Aenderung der Mengenverhältnisse der Aminoazoverbindungen zu der Dinitrostilbendisulfonsäure und durch Abänderung der Kondensationsbedingungen, z.B. Aenderung der Kondensationsraummenge, Alkalinität oder Kondensationstemperatur ein Reaktionsprodukt erhalten werden, welches nach der Kupferung Baumwolle in oliven bis grünlich-grauen Farbtönen färbt. Um ein reproduzierbares Reaktionsergebnis zu erhalten, muss der Ist-Zustand der Kondensation verfolgt werden und z.B. durch Temperaturänderung oder pH-Aenderung die Kondensation gesteuert werden.

Beispiel 3: 1-Aminonaphthalin-5-sulfonsäure wird bei pH-Wert 1 und einer Temperatur von 0 bis 5°C mit Natriumnitrit in üblicher Weise diazotiert, wobei der Nitritverbrauch anfangs sehr rasch erfolgt und am Ende der Diazotierung sehr langsam erfolgt. Der Endpunkt der Diazotierung ist über die Kontrolle des Nitritüberschusses schwer feststellbar und führt zu einem vorzeitigen Abbrechen der Umsetzung. Die angeblich vollständig diazotierte Verbindung wird vor der Kupplung auf eine Kupplungskomponente auf einen pH-Wert von ca. 3,5 eingestellt, wobei sich nicht diazotierte 1-Aminonaphthalin-5-sulfonsäure und die diazotierte Komponente zu dem roten Farbstoff der Formel 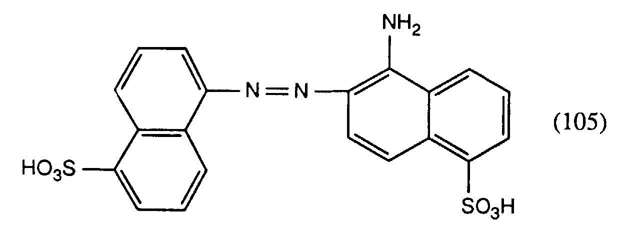 umsetzen. Für die nachfolgende Kupplung steht nicht mehr genügend diazotiertes Amin zur Verfügung, so dass die Umsetzung unvollständig ist und der gesuchte Farbton durch den Anteil des Farbstoffes der Formel (105) verfälscht wird.

Zur Steuerung dieser Diazotierung mittels UV/VIS-Absorptionsspektroskopie wird das UV/VIS-Absorptionsspektrum einer vollständig ausdiazotierten Probe aufgenommen und als Soll-Spektrum gespeichert. Im Verlauf der Diazotierung werden im Abstand von 30 Minuten Proben der Reaktionsmasse entnommen, mit Natriumacetat auf pH-Wert 4,0 gestellt, jeweils das Absorptionsspektrum aufgenommen, wobei die unvollständige Diazotierung durch die Bildung des Farbstoffes der Formel (105) und eine entsprechende Absorption bei ca. 500 nm angezeigt wird. Wenn das Spektrum der Reaktionsmasse keine Abweichung gegenüber dem Soll-Spektrum zeigt, ist die Diazotierung beendet und die Reaktion wird abgebrochen.

Beispiel 4: Der Farbstoff der Formel 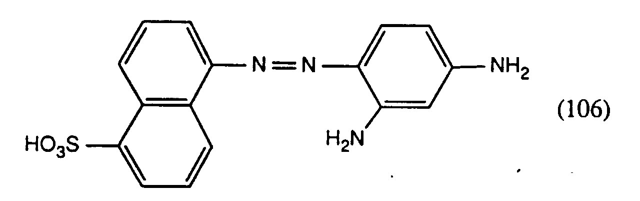 wird durch Zugabe von diazotiertem 1-Aminonaphthalin-5-sulfosäure gemäss Beispiel 3 zu einer wässrigen 1,3-Phenylendiamin-Lösung bei pH-Wert 7,5 bis 8,0 und 15 bis 20°C innerhalb von 30 Minuten erhalten. Der pH-Wert fällt während der Zugabe auf 4,0 bis 4,5. Die Umsetzung ist sehr schnell. Die Vorlage enthält 95 % der vorgesehenen Kupplungskomponente. Die restlichen 5 % werden schrittweise eingetragen unter ständiger Kontrolle eines Kupplungskomponenten-Ueberschuss. Dazu wird jeweils eine Probe der Reaktionsmasse verdünnt und mit einer geringen Menge einer wässrigen gepufferten Lösung von diazotiertem 4-Nitroanilin versetzt und das Absorptionsspektrum aufgezeichnet. Ueberschüssiges 1,3-Phenylendiamin gibt mit diazotiertem 4-Nitroanilin einen farbstarken orangen Farbstoff, wodurch das Soll-Spektrum hypsochrom verschoben wird.

Beispiel 5: Die Herstellung des Farbstoffzwischenproduktes der Formel 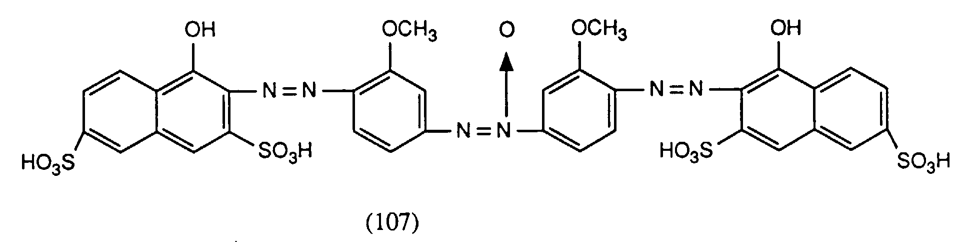 erfolgt durch reduktive Kondensation aus der Monoazoverbindung der Formel 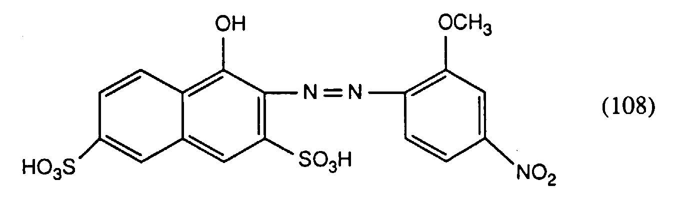 in wässrigem Medium bei 53 bis 55° und einem pH-Wert von mindestens 12 in Gegenwart von Glukose. Das resultierende Reaktionsgemisch enthält als Hauptkomponente die Verbindung der Formel (107). Die Umsetzung ist nicht selektiv. Unter den Umsetzungsbedingungen bleibt die reduktive Kondensation nicht auf der Stufe der Verbindung der Formel (107) stehen, sondern es erfolgt Zersetzung der Reaktionsmasse bei Verlängerung der Reaktionszeit. Der Endpunkt der reduktiven Kondensation muss exakt bestimmt werden und die Umsetzung sofort abgebrochen werden.

Zur Steuerung des Verfahrens mittels UV/VIS-Absorptionsspektroskopie ist es notwendig ein Spektrum der Monoazo-Verbindung der Formel (108) sowie ein Spektrum des gewünschten Endproduktes zu speichern und den Reaktionsverlauf spektroskopisch zu verfolgen. Das Absorptionsmaximum der Monoazoverbindung der Formel (108) liegt bei ca. 500 bis 540 nm und das Absorptionsmaximum des gewünschten Endproduktes liegt bei ca. 570 bis 610 nm. Sobald die Differenz des Absorptionsspektrums der Reaktionsmasse und des gespeicherten Spektrums innerhalb der Fehlergrenze liegt, wird der Zulauf des Reduktionsmittels unterbrochen.

Nach entmethylierender Kupferung der Verbindung der Formel (107) wird ein Farbstoff erhalten, der Papier in blauen Tönen färbt.

Beispiel 6: Der Farbstoff der Formel 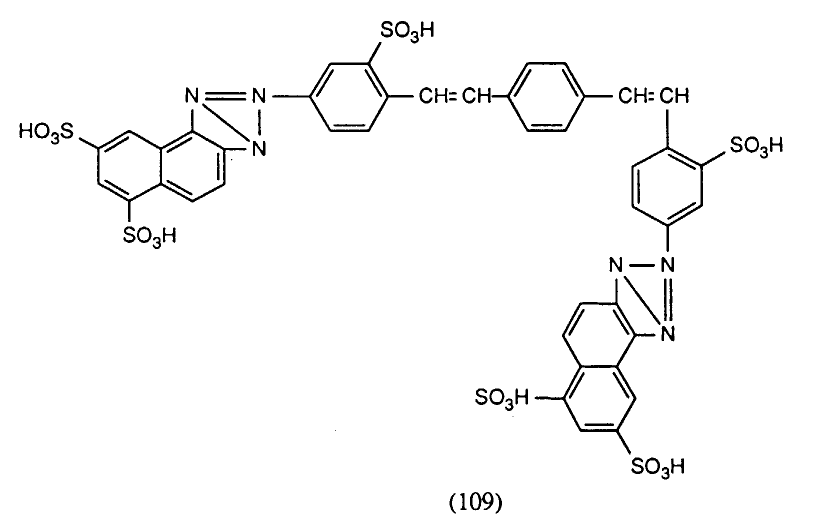 wird durch eine kupferkatalysierte interne Zyklisierung der Verbindung der Formel 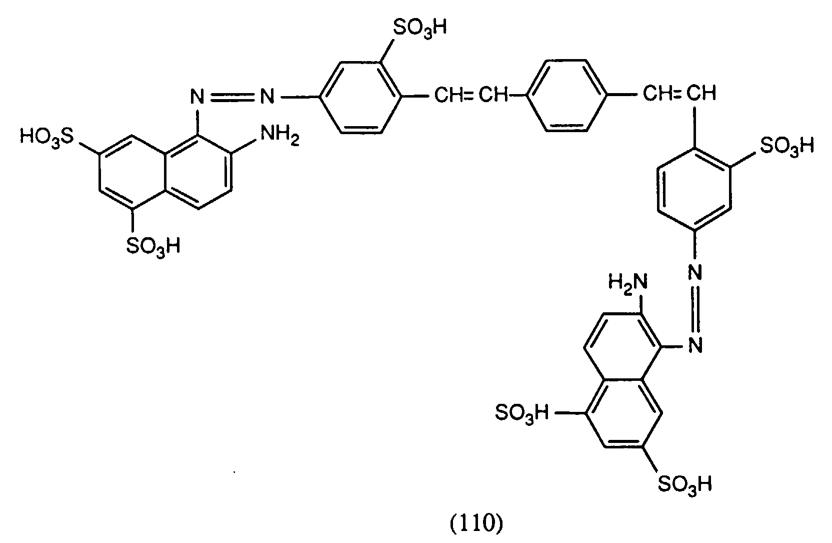 erhalten. Die oxidative Kondensation erfolgt in wässrigem Medium bei einer Temperatur zwischen 95 und 97° und einem pH-Wert zwischen 12,5 und 12,8 in Gegenwart von CuSO₄ innerhalb von 8 bis 10 Stunden. Der gewünschte Farbstoff, der Baumwolle in brillant-gelbem Farbton färbt, wird nur nach vollständiger Zyklisierung und sofortigem Unterbruch der Reaktion durch Ansäuern der Reaktionsmasse erhalten. Die Gegenwart von unumgesetztem Farbstoff der Formel (110) führt zu einer Rotverschiebung des Farbtons. Als Folge des Ueberschreitens des Reaktionsendpunktes enthält die Reaktionsmasse Zersetzungsprodukte und auf Baumwolle gefärbt wird ein trüber gelber Farbton erhalten.

Zur Steuerung des Verfahrens mittels UV/VIS-Absorptionsspektroskopie ist es notwendig ein Spektrum der Verbindung der Formel (110) sowie ein Spektrum des gewünschten Endproduktes zu speichern und den Reaktionsverlauf spektroskopisch zu verfolgen. Das Absorptionsmaximum der Verbindung der Formel (110) liegt bei ca. 500 bis 520 nm und das Absorptionsmaximum des gewünschten Endproduktes liegt bei ca. 400 nm. Sobald die Differenz des Absorptionsspektrums der Reaktionsmasse und des gespeicherten Spektrums innerhalb der Fehlergrenze liegt, wird die Umsetzung durch Ansäuern abgebrochen.

## Patentansprüche

1. Verfahren zur on-line Steuerung und Optimierung chemisch industrieller Diazotierungen, Kupplungsreaktionen, Komplexierungen, Kondensationsreaktionen, Reduktionsreaktionen und Oxydationsreaktionen für die Herstellung von Farbstoffen, worin man
ein UV/VIS-Spektrum mindestens einer Ausgangsverbindung zwecks Bestimmung der Reinheit oder des Ansatzverhältnisses von Ausgangsverbindungen, oder der Bestimmung der Ursache von Abweichungen vom Sollspektrum während des Herstellungsverfahrens aufzeichnet,
ein UV/VIS-Spektrum mindestens eines Reaktionsproduktes aufzeichnet, und während des Herstellungsverfahrens durch Differenzanalyse des momentanen UV/VIS-Spektrums der Reaktionsmasse und des UV/VIS-Absorptionsspektrums des gewünschten Reaktionsproduktes das Verfahren so steuert und optimiert, dass die Differenz der Spektren kleiner wird, und
zur Steuerung und Optimierung die Parameter Temperatur, Druck, Menge der Ausgangsmaterialien, Reaktionszeit und/oder pH-Wert einsetzt.

2. Verfahren gemäss Anspruch 1, dadurch gekennzeichnet, dass man Herstellungsverfahren durch Differenzanalyse der Konzentrationsverhältnisse mindestens einer Ausgangsverbindung und mindestens eines Reaktionsproduktes steuert und optimiert.

3. Verfahren gemäss Anspruch 2, dadurch gekennzeichnet, dass man Herstellungsverfahren so steuert und optimiert, dass man die Differenzanalyse mit bestimmter Wiederholfrequenz ausführt.

4. Verfahren gemäss Anspruch 1, dadurch gekennzeichnet, dass man UV/VIS-Spektren mindestens einer Ausgangsverbindung und mindestens eines Reaktionsproduktes in einem Computer speichert, während des Herstellungsverfahrens cyclisch den momentanen Stand der Umsetzung durch Differenzanalyse der Konzentrationsverhältnisse des Ist-Zustandes der Reaktionsmasse und des gewünschten Reaktionsproduktes spektroskopisch bestimmt, und anhand dieser Differenz gegebenenfalls durch Aenderung eines oder mehrerer der Parameter Temperatur, Druck, Menge der Ausgangsmaterialien, Reaktionszeit und/oder pH-Wert die Spektrendifferenz gegen Null steuert.

5. Verfahren gemäss einem der Ansprüche 1 bis 4, dadurch gekennzeichnet, dass man Verbindungen mit unspezifischem UV/VIS-Spektrum oder mit ungenügend zu analysierender Differenz derivatisiert und die Steuerung und Optimierung anhand der Derivate der Verbindungen durchgeführt.

6. Verfahren gemäss einem der Ansprüche 1 bis 5, dadurch gekennzeichnet, dass die spektrophotometrisch zu analysierende Probe entweder dem Reaktionsmedium entnommen wird und man gegebenenfalls eine Probenaufbereitung anschliesst, oder die Messung im Reaktionsmedium mit Hilfe eines optischen Sensors vornimmt.

7. Verfahren gemäss einem der Ansprüche 1 bis 6, dadurch gekennzeichnet, dass die zu analysierende Probe und UV/VIS-Messgerät über Lichtleiter miteinander verbunden sind.

8. Verfahren gemäss einem der Ansprüche 1 bis 7, dadurch gekennzeichnet, dass man als UV/VIS-Messgerät ein Dioden-Zeilen-Spektrophotometer verwendet.

9. Verfahren gemäss Anspruch 6, dadurch gekennzeichnet, dass die zu analysierende Probe dem Reaktionsmedium mittels by-pass oder Ventil entnommen wird.

10. Verwendung des Verfahrens nach Anspruch 1 zur Steuerung und Optimierung von Herstellungsverfahren für Mono- oder Polyazo-, Metallkomplexazo-, Anthrachinon-, Phthalocyanin-, Formazan-, Azomethin-, Nitroaryl-, Dioxazin-, Phenazin- oder Stilbenfarbstoffe.

11. Verwendung des Verfahrens nach Anspruch 1 zur Steuerung und Optimierung von kontinuierlichen und insbesondere von diskontinuierlichen Herstellungsverfahren mittels der Methode der UV/VIS-Spektroskopie.

12. Verwendung des Verfahrens nach Anspruch 1 zur on-line, computer-integrierten und automatisierten Steuerung.

13. Verwendung des Verfahrens nach Anspruch 1 zur Nuancierung eines vorgewählten Farbtons bei der Herstellung von Farbstoffen.

14. Verwendung des Verfahrens nach Anspruch 1 zur Steuerung und Optimierung von Kondensationsreaktionen oder Metallisierungen.

## Claims

1. A process for the on-line control and optimisation of chemical industrial diazotisation, coupling, complexing, condensation, reduction and oxidation reactions for the preparation of dyes, which comprises
recording a UV/VIS spectrum of at least one starting compound in order to determine the purity or batch ratio of starting compounds or to determine the cause of deviations from the intended spectrum during the preparatory process,
recording a UV/VIS spectrum of at least one reaction product and, during the preparatory process, controlling and optimising the process, by differential analysis of the instantaneous UV/VIS spectrum of the reaction mass and of the UV/VIS absorption spectrum of the desired reaction product, in such a way that the difference between the spectra becomes smaller, and
using the parameters of temperature, pressure, amount of starting materials, reaction time and/or pH for control and optimisation.

2. A process according to claim 1, which comprises controlling and optimising preparatory processes by differential analysis of the concentration ratios of at least one starting compound and of at least one reaction product.

3. A process according to claim 2, which comprises controlling and optimising preparatory processes such that the differential analysis is repeated with specific frequency.

4. A process according to claim 1, which comprises storing UV/VIS spectra of at least one starting compound and of at least one reaction product in a computer, determining spectroscopically during the preparatory process, cyclically, the instantaneous state of the reaction by differential analysis of the concentration ratios of the actual state of the reaction mass and of the desired reaction product, and from this difference, if necessary by changing one or more of the parameters of temperature, pressure, amount of starting materials, reaction time and/or pH, controlling the difference between the spectra towards zero.

5. A process according to any one of claims 1 to 4, which comprises derivatising compounds having an unspecific UV/VIS spectrum or a difference insufficient for analysis, and carrying out control and optimisation using the derivatives of the components.

6. A process according to any one of claims 1 to 5, which comprises taking the sample for spectrophotometric analysis either from the reaction medium and, in a subsequent optional step, working up said sample, or carrying out the measurement in the reaction medium with the aid of an optical sensor.

7. A process according to any one of claims 1 to 6, wherein the sample for analysis and the UV/VIS measuring apparatus are linked to each other by optical waveguides.

8. A process according to any one of claims 1 to 7, which comprises the use of a diode-array spectrophotometer as UV/VIS measuring apparatus.

9. A process according to claim 6, wherein the sample for analysis is taken from the reaction medium by by-pass or valve.

10. The use of a process according to claim 1 for controlling and optimising processes for the preparation of monoazo or polyazo dyes, metal complex azo dyes, anthraquinone, phthalocyanine, formazan, azomethine, nitroaryl, dioxazine, phenazine or stilbene dyes.

11. The use of a process according to claim 1 for controlling and optimising continuous and, in particular, discontinuous preparatory processes using the method of UV/VIS spectroscopy.

12. The use of a process according to claim 1 for on-line, computer-integrated and automated control.

13. The use of a process according to claim 1 for shading a preselected hue in the synthesis of dyes.

14. The use of a process according to claim 1 for controlling and optimising condensation reactions or metallisations.

## Revendications

1. Procédé de commande en direct et d'optimisation de réactions chimiques à l'échelle industrielle, telles que les réactions de diazotation, de copulation, de complexation, de condensation, de réduction et d'oxydation lors de la préparation de colorants, procédé au cours duquel on trace un spectre d'absorption UV/visible d'au moins un composé de départ afin de déterminer la pureté ou le rapport des substances de départ, ou pour déterminer la cause d'un écart par rapport au spectre de référence, au cours duquel on trace le spectre d'absorption UV/visible d'au moins un produit réactionnel et dans lequel on intervient, grâce à l'analyse de la différence entre le spectre d'absorption UV/visible instantané de la masse réactionnelle et le spectre d'absorption UV/visible du produit réactionnel souhaité, de manière à réguler et optimiser le procédé pour diminuer cette différence, et dans lequel on utilise pour la commande et l'optimisation des paramètres tels que la température, la pression, la quantité des substances de départ, la durée de réaction et/ou le pH.

2. Procédé conforme à la revendication 1, caractérisé en ce que l'on commande et optimise des procédés de préparation par analyse différentielle des rapports de concentration d'au moins un composé initial et d'au moins un produit réactionnel.

3. Procédé conforme à la revendication 2, caractérisé en ce que l'on commande et optimise des procédés de préparation en répétant l'analyse différentielle avec une certaine fréquence.

4. Procédé conforme à la revendication 1, caractérisé en ce que l'on enregistre les spectres d'absorption UV/visible d'au moins un composé de départ et d'au moins un produit réactionnel à l'aide d'un ordinateur, en ce que l'on analyse spectroscopiquement, au cours du procédé de préparation et de façon cyclique, l'état instantanée de la réaction par analyse différentielle des rapports de concentration de l'état réel de la masse réactionnelle et du produit réactionnel recherché, et en ce que, à partir de cette différence, l'on fait tendre la différence entre les spectres vers zéro en intervenant éventuellement sur un ou plusieurs paramètres tels que la température, la pression, les quantités de substances de départ, la durée réactionnelle et/ou le pH.

5. Procédé conforme à une des revendications 1 à 4, caractérisé en ce que l'on prépare des dérivés de composés présentant un spectre d'absorption UV/visible non spécifique ou présentant une différence insuffisante pour l'analyse, et en ce que l'on effectue la régulation et l'optimisation à l'aide des dérivés des composés.

6. Composé conforme à une des revendications 1 à 5, caractérisé en ce que l'échantillon à analyser par spectrométrie est prélevé dans le milieu réactionnel et éventuellement traité, ou en ce que la mesure se fait dans le milieu réactionnel à l'aide d'un capteur optique.

7. Procédé conforme à une des revendications 1 à 6, caractérisé en ce que l'échantillon à analyser et l'appareil de mesure UV/visible sont reliés l'un à l'autre par l'intermédiaire de fibres optiques.

8. Procédé conforme à une des revendications 1 à 7, caractérisé en ce que l'on utilise, comme appareil de mesure d'absorption UV/visible, un spectrophotomètre à barette de diodes.

9. Procédé conforme à la revendication 6, caractérisé en ce que l'échantillon à analyser est prélevé dans le milieu réactionnel au moyen d'une dérivation ou d'une vanne.

10. Utilisation du procédé conforme à la revendication 1 pour la commande et l'optimisation de procédés de préparation de colorants mono- ou polyazoïques, métallifères, anthraquinoniques, de colorants de type phtalocyanine, de type formazan, de colorants azométhiniques, nitroaryliques, dioxaziniques, phénaziniques ou stilbéniques.

11. Utilisation du procédé conforme à la revendication 1 pour la commande et l'optimisation de procédés de préparation continus et en particulier discontinus à l'aide de la spectroscopie d'absorption UV/visible.

12. Utilisation du procédé conforme à la revendication 1 pour la commande en direct, automatisée et gérée par ordinateur.

13. Utilisation du procédé conforme à la revendication 1 pour le nuançage selon un témoin de couleur prédéterminé dans le cadre de la préparation de colorants.

14. Utilisation du procédé conforme à la revendication 1 pour la commande et l'optimisation de réactions de condensation ou de métallation.
